# EUROPÄISCHE PATENTSCHRIFT

(11) **EP 1 154 546 B1**
(45) Veröffentlichungstag und Bekanntmachung des Hinweises auf die Patenterteilung: **15.12.2004**
(21) Anmeldenummer: 01109252.5
(22) Anmeldetag: 14.04.2001
(51) Int. Cl.: H02K 5/22

(54) **Stator eines Aussenläufermotors mit Schutzleiter-Anschlussteil**
Stator of an external-rotor motor with protective wire connection element
Stator d'un moteur électrique à rotor extérieur avec un élément de raccordement de conducteur de protection

(30) Priorität: 11.05.2000 DE 10023071
(43) Veröffentlichungstag der Anmeldung: 14.11.2001
(73) Patentinhaber: ebm-papst Mulfingen GmbH & Co.KG, 74673 Mulfingen (DE)
(72) Erfinder: Streng, Gunter, Dipl.-Ing.(FH), 74575 Schrozberg (DE); Müller, Rainer, Dipl.-Ing.(FH), 74639 Zweiflingen-Pfahlbach (DE)
(74) Vertreter: Patentanwälte Dr. Solf & Zapf

(56) Entgegenhaltungen:
- EP-A- 0 068 729
- EP-A- 0 384 131
- DE-A- 3 121 332

## Beschreibung

Die vorliegende Erfindung betrifft einen Stator für einen Außenläufermotor mit einem Statorblechpaket, einer Wellenöffnung für eine Rotorwelle, Statorwicklungen, einem sich zumindest auf einer Stirnseite axial in Richtung eines von den Statorwicklungen gebildeten Statorwickelkopfes erstreckenden, hohlzylindrischen Stirnisolationsschaft, sowie einem mit dem Statorblechpaket und einem Schutzleiter elektrisch verbindbaren Schutzleiter-Anschlussteil, welches im Stator kraft- und/oder formschlüssig gehalten wird.

Ein derartiger Stator mit einem Schutzleiter-Anschlussteil ist aus der EP 384 131 bekannt. Diese beschreibt einen Elektroaußenläufermotor, bei dem der Stator über einen sich axial durch den Stirnisolationsschaft hindurch in eine axiale zentrische Öffnung des Statorblechpaketes erstreckendes Lagertragrohr an einem Motorflansch befestigt ist. Ein Schutzleiter ist mittelbar über ein Schutzleiter-Anschlussteil zumindest mit dem Statorblechpaket verbunden. Das Schutzleiter-Anschlussteil weist einen in dem Anschlussbereich angeordneten und mit dem Schutzleiter leitend verbundenen ersten Endabschnitt auf, an den sich ein von dem Anschlussbereich axial zwischen dem Lagertragrohr und dem Stimisolationsschaft in Richtung des Statorblechpaketes streckender Mittenabschnitt anschließt. Dieser Mittenabschnitt geht erfindungsgemäß in einen zur elektrischen Verbindung kraft- und/oder formschlüssig zwischen dem Statorblechpaket und dem Lagertragrohr angeordneten zweiten Endabschnitt über. Bei Verwendung eines metallischen Lagertragrohres ist damit auch dieses und auch der mit dem Lagertragrohr verbundene Motorflansch mit dem Schutzleiter verbunden. Die elektrische Kontaktierung des Schutzleiteranschlusses mit dem Statorblechpaket erfolgt durch Einpressen des Lagertragrohres. Die elektrische Verbindung zum Motorflansch erfolgt nur wenn das Lagertragrohr aus einem elektrisch leitenden Material besteht. Bei Statoren, die kein elektrisch leitendes Lagertragrohr, sondem Kugellager oder Kalottenlager zur Lagerung der Rotorwelle aufweisen, ist eine komplette Schutzkontaktierung des gesamten Systems einschließlich des Außenläufers nicht gewährleistet. Nachteilig bei dieser Ausführungsform ist außerdem, dass der Schutzleiter fest mit dem Schutzleiter-Anschlussteil des Stators verbunden ist, weswegen das Schutzleiter-Anschlussteil zusammen mit dem Schutzleiter vorkonfektioniert werden muss, der Einbau und Anschluß des Schutzleiter-Anschlussteils kann nicht an individuelle Bedingungen angepasst werden. Weiterhin besteht die Gefahr der Beschädigung des Schutzleiter-Anschlussteils oder des damit verbundenen elektrischen Leiters während des Einpressens des Lagertragrohres.

In der EP 68 729 A1 ist ein nicht gattungsgemäßer Innenläufermotor beschrieben, der verschiedene Merkmale, wie einen Stirnisolationsschaft nicht oder andere Merkmale aufweist. Das Dokument offenbart auch ein Schutzleiter-Anschlußteil, welcher in eine Vertiefung des Innnläufer-Motorgehäuses eingesetzt werden kann. Das Einsetzen muß, wie sich aus den Geometrien der Vertiefung und des Anschlußteils ergibt, bei geöffnetem Gehäuse quer zur axialen Richtung in die Gehäusehälfte hinein vorgenommen werden, wobei ein ebenfalls quer zur axialen Richtung einsetzbarer Bolzen als Sicherung vorgesehen ist. Zwar kann in einer alternativen Ausführung auf einen solchen Bolzen verzichtet werden, die Montage ist jedoch trotzdem als relativ aufwendig anzusehen. Insbesondere ergibt sich dies daraus, dass der Schutzleiter in einem Loch des Anschtußteils befestigt und dann manuell durch eine Gehäuseöffnung herausgeführt werden muß.

Der Erfindung liegt die Aufgabe zu Grunde, einen Stator zu schaffen, bei dem die elektrische Schutzkontaktierung des gesamten Systems einschließlich des Außenläufers möglichst einfach und kostengünstig ist, wobei die Möglichkeit einer automatisiert durchführbaren Montage besteht.

Erfindungsgemäß wird dies dadurch erreicht, dass in dem hohlzylindrischen Stimisolationsschaft ein Lagersitz für ein Lager zur Lagerung der Rotorwelle ausgebildet ist, wobei zwischen dem Lager und einer äußeren Umfangsfläche des Stimisolationsschafts eine sich von der dem Statorblechpaket abgewandten Öffnung des Stimisolationsschafts aus bis in die Wellenöffnung hinein erstreckende Ausnehmung ausgeformt ist, in die das Schutzleiter-Anschlussteil bei einer Montage durch ein axiales Stecken einschiebbar ist und im eingeschobenen Zustand das Statorblechpaket und das Lager elektrisch kontaktiert und wobei das Schutzleiter-Anschlussteil einen Einsteckkontakt für eine elektrische Kontaktierung mit dem Schutzleiter derart aufweist, dass ein mit dem Schutzleiter verbundenes Steckverbindungsmittel bei der Montage nachträglich auf das in die Ausnehmung eingesetzte Schutzleiter-Anschlussteil kontaktierend aufgesetzt werden kann.

Der Erfindung liegt die Erkenntnis zugrunde, dass die mechanische Herstellung des Stators einschließlich der Bewickelung abgeschlossen sein sollte, bevor die Verbindung mit äußeren Anschlußleitungen erfolgt. Zum einen werden dadurch die Produktionsschritte der Herstellung vereinfacht, zum anderen wird die Gefahr der Beschädigung des Schutzleiter-Anschlussteils oder des damit verbundenen elektrischen Leiters verringert. Dies setzt voraus, dass auch die Schutzkontaktierung des Stators am Ende des Herstellungs- und Montagevorgangs erfolgt. Erfindungsgemäß ist das Schutzleiter-Anschlussteil nach der Montage des Stators, also auch nach dem Einsatz des Lagers für die Rotorwelle, in den Stator einschiebbar und kontaktiert im eingesetzten Zustand das Statorblechpaket und das Lager. Vorteilhafterweise erfolgt die elektrische Kontaktierung des Schutzleiters über eine Steckverbindung mit dem bereits im Stator eingesetzten Schutzleiter-Anschlussteil. Die erfindungsgemäße Ausführung des Stators ermöglicht eine einfache und kostengünstige Schutzkontaktierung sowohl des Stators als auch des Rotors. Die Motoreinheit ist vollständig über den Schutzleiter abgesichert und das Einsetzen des Schutzleiter-Anschlussteils ist gegebenenfalls auch automatisiert durchführbar. Das Schutzleiter-Anschlussteil ist beispielsweise einsetzbar für Kugel- und Kalottenlager zur Aufnahme der Rotorwelle.

Weitere vorteilhafte Ausgestaltungsmerkmale der Erfindung sind in den Unteransprüchen und in der folgenden Beschreibung enthalten.

Anhand der Zeichnung soll im folgenden die Erfindung beispielhaft näher erläutert werden. Dabei zeigen:
- Fig. 1: eine teilgeschnittene Seitenansicht eines erfindungsgemäßen Stators mit Kalottenlager,
- Fig. 2: eine perspektivische Darstellung eines erfndungsgemäßen Stators,
- Fig. 3: eine perspektivische Darstellung eines erfindungsgemäßen Schutzleiter-Anschlussteils und
- Fig. 4: eine perspektivische Darstellung eines erfindungsgemäßen Stirnisolationschafts ohne eingesetztes Schutzleiter-Anschlussteil.

In den verschiedenen Zeichnungsfiguren sind gleiche bzw. gleichwirkende Teile und Komponenten stets mit den gleichen Bezugsziffern bezeichnet.

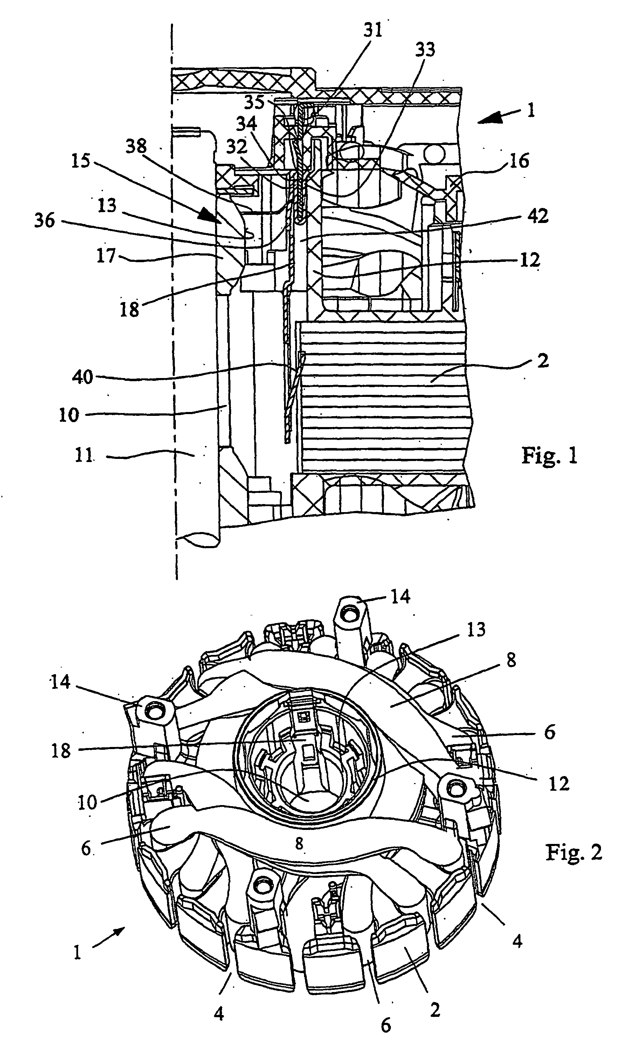

Gemäß Fig. 1 und 2 besteht ein erfindungsgemäßer Stator 1 eines Außenläufermotors aus einem Statorblechpaket 2 und in Nuten 4 des Statorblechpaketes 2 angeordneten Statorwicktungen 6, die auf beiden Stimseiten des Stators jeweils einen Statorwickelkopf 8 bilden. Weiterhin weist der erfindungsgemäße Stator 1 eine mittig angeordnete durchgängige Wellenöffnung 10 auf, durch die sich eine nur in Fig. 1 dargestellte Rotorwelle 11 des Außenläufers erstreckt. Auf beiden Stirnseiten des Statorblechpaketes 2 erweitert sich die Wellenöffnung 10 und bildet jeweils einen sich axial erstreckenden rohrförmigen Stirnisolationsschaft 12, der gleichzeitig als Lagersitz 13 für ein Lager 15 der Rotorwelle 11 dient. Der Stirnisolationsschaft 12 dient zur Isolierung der Statorwickelungen 6 gegenüber dem Statorblechpaket 2 und gegenüber dem Lagersystem mit der Rotorwelle 11. Weiterhin weist der Stator 1 auf einer der beiden Stirnseiten vier um 90° zueinander versetzte und am äußeren Rand des Statorbtechpaketes 2 angeordnete, sich axial erstreckende Anschlussstutzen 14 auf. Auf diese ist eine am Statorflansch befestigte Verschaltungsplatte 16 befestigt, die zum Verschalten der Enden der Statorwicklungen 6 und zum Verbinden der Statorwicklungen 6 mit hier nicht dargestellten Motoranschlussleitungen dient

Erfindungsgemäß ist vorgesehen, dass ein Schutzleiter mittelbar über ein Schutzleiter -Anschlussteil 18 gemäß Fig. 1 sowohl mit dem Statorblechpaket 2 als auch einem Lager 15, hier dargestellt als Kalottenlager 17, verbunden ist. Durch die Verbindung des Schutzleiter-Anschlussteiles 18 mit dem Lager 15 ist auch über die Rotorwelle 11 eine Schutzleiterverbindung mit dem Rotor des Motors hergestellt. Anstelle des Kalottenlagers 17 sind auch andere Lagerarten, beispielsweise Kugellager denkbar.

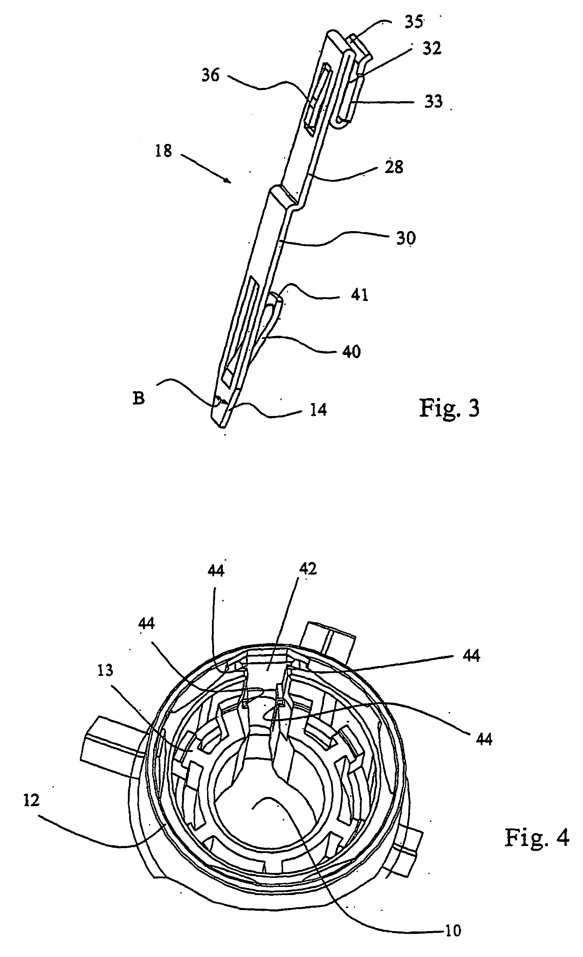

Ein vorteilhaftes Schutzleiter-Anschlussteil 18 ist in Fig.3 dargestellt. Das Schutzleiter-Anschlussteil 18 ist durch Kröpfung in zwei Längsabschnitte, einen ersten Längsabschnitt 28 und einen zweiten Längsabschnitt 30 unterteilt. An dem der Kröpfung gegenüberliegenden Ende des ersten Längsabschnitts 28 ist durch Biegeformung ein U-förmiger Einsteckkontakt 32 ausgeformt, wobei zwischen den U-Schenkeln in die der Wellenöffnung 10 entgegengesetzten Richtung eine Einstecköffnung 35 ausgebildet ist, in den z. B. ein Flachstecker 31 nachträglich aufgesetzt werden kann. Vorteilhafterweise erweitert sich der Einsteckkontakt 32 in Richtung der Einstecköffnung 35, so dass ein Einstecken beispielsweise des Flachsteckers 31 vereinfacht wird. Erfindungsgemäß weist ein kurzer äußerer U-Schenkel 33 des Einsteckkontaktes 32 einen ausgestanzten, sich im wesentlichen in Längsrichtung des ersten Längsabschnitts 28 erstreckenden und in den Einsteckkontakt 32 hinein gebogenen ersten Federarm 34 auf, der auf seiner der Einstecköffnung 35 zugewandten Seite mit dem Schutzleiter-Anschlussteil 18 verbunden ist. Aus dem ersten Längsabschnitt 28 ist im Bereich des Einsteckkontaktes 32 weiterhin ein sich ebenfalls im wesentlichen in Längsrichtung des ersten Längsabschnitts 28 erstreckender, auf der dem Einsteckkontakt 32 gegenüberliegenden Seite des Schutzleiter-Anschlussteils 18 herausgeführter zweiter Federarm 36 ausgeformt, der mit seiner der Einstecköffnung 35 zugewandten Seite mit dem Schutzleiter-Inschlussteil 18 verbunden ist Der zweite Federarm 36 kontaktiert im eingesetzten Zustand des Schutzleiter-Anschlussteils 18 das Läger 15, vorzugsweise, wie in Fig. 1 dargestellt, eine Klemmbrille 38 eines Kalottenlagers 17. Aus dem zweiten Längsabschnitt 30 ist ein dritter Federarm 40 auf der den Einsteckkontakt 32 aufweisenden Seite des Schutzleiter-Anschlussteil 18 herausgeführt. Dessen Haupterstreckung verläuft im wesentlichen in Längsrichtung des zweiten Längsabschnitts 30 und der dritte Federarm 40 ist mit seiner der Öffnung des Einsteckkontakts 32 abgewandten Seite an dem Schutzleiter-Anschlussteil 18 angeformt. Im eingesetzten Zustand des Schutzleiter-Anschlussteils 18 kontaktiert der dritte Federarm 40 das Statorblechpaket 2. Um eine größere Flächenberührung mit damit verbundener verbesserter Kontaktierung zwischen Schutzleiter-Anschlussteil 18 und Statorblechpaket 2 zu erreichen, weist der dritte Federarm 40 erfindungsgemäß an seinem Ende 41 einen Abschnitt auf, der sich parallel zur Längsachse des zweiten Längsabschnitts 30 erstreckt. Das dem ersten Längsabschnitt 28 gegenüberliegende Ende des zweiten Längsabschnitts 30 weist vorteilhafterweise einen Endabschnitt 46 auf, der zum Ende des zweiten Längsabschnitts 30 hin in der Breite B abnimmt und somit das Einführen des Schutzleiter-Anschlussteils 18 in den Stator 1 erleichtert. Das Schutzleiter-Anschlussteil 18 ist vorteilhafterweise aus einem einstückigen gebogenen Blechzuschnitt, insbesondere aus Stahlblech gefertigt.

Wie in den Fig.1, 2 und 4 zu erkennen ist, erstreckt sich zwischen dem Lager 15 und der äußeren Umfangsfläche des Stirnisolationsschafts 12 eine sich von der dem Statorblechpaket 2 abgewandten Öffnung des Stimisolationsschafts 12 aus axial bis in die Wellenöffnung 10 hinein erstreckende Ausnehmung 42, in die das Schutzleiter-Anschlussteil eingeschoben werden kann und darin insbesondere formschlüssig gehalten wird. Erfindungsgemäß weist die Ausnehmung 42 zwei Nutenpaare 44 auf, in die das Schutzleiter-Anschlussteil 18 eingeschoben werden kann. Eine Schutzkontaktierung des Stators 1 erfolgt über einen Schutzleiter, der über einen Flachstecker 31 in den Einsteckkontakt 32 eingeschoben werden kann. Vorteilhafterweise weist die auf die Anschlußstutzen 14 axial aufsetzbare Verschaltungsplatte 16 eine Halterung auf, in der der mit dem Schutzleiter verbundene Flachstecker 31 derart gehalten ist, dass dieser im montierten Zustand der Verschaltungsplatte 16 in den Einsteckkontakt 32 des Schutzleiter-Anschlussteils 18 hineinragt und diesen elektrisch kontaktiert.

Vorteilhafterweise erlaubt diese Anordnung in Kombination mit der Anordnung des in der Verschaltungsplatte 16 gehaltenen Flachsteckers 31 eine einfache und schnelle Montage des Stators 1, da die Montageschritte für die Schutzkontaktierung des Stators 1 ausschließlich in axialer Richtung des Stators 1 erfolgen. Das eingeschobene Schutzleiter-Anschlussteil 18 sitzt fest in der.Ausnehmung 42 und kontaktiert einerseits alle wesentlichen Bauteile des Stators 1, sowie andererseits über die Lagerelemente und die Rotorwelle 11 den Rotor des Außenläufermotors.

## Patentansprüche

1. Stator (1) für einen Außenläufermotor mit einem Statorblechpaket (2), einer Wellenöffnung (10) für eine Rotorwelle (11), Statorwicklungen (6), einem sich zumindest auf einer Stirnseite axial in Richtung eines von den Statorwicklungen (6) gebildeten Statorwickelkopfes (8) erstreckenden, hohlzylindrischen Stirnisolationsschaft (12), sowie einem mit dem Statorblechpaket (2) und einem Schutzleiter elektrisch verbindbaren Schutzleiter-Anschlussteil (18), welches im Stator (1) kraft- und/oder formschlüssig gehalten wird,
**dadurch gekennzeichnet, dass** in dem hohlzylindrischen. Stirnisolationsschaft (12) ein Lagersitz (13) für ein Lager (15) zur Lagerung der Rotorwelle (11) ausgebildet ist, wobei zwischen dem Lager (15) und einer äußeren Umfangsfläche des Stirnisolationsschafts (12) eine sich von der dem Statorblechpaket (2) abgewandten Öffnung des Stirnisolationsschafts (12) aus bis in die Wellenöffnung (10) hinein erstreckende Ausnehmung (42) ausgeformt ist, in die das Schutzleiter-Anschlussteil (18) bei einer Montage durch ein axiales Stecken einschiebbar ist und im eingeschobenen Zustand das Statorblechpaket (2) und das Lager (15) elektrisch kontaktiert und wobei das Schutzleiter-Anschlussteil (18) einen Einsteckkontakt (32) für eine elektrische Kontaktierung mit dem Schutzleiter derart aufweist, dass ein mit dem Schutzleiter verbundenes Steckverbindungsmittel (31) bei der Montage nachträglich auf das in die Ausnehmung (42) eingesetzte Schutzleiter-Anschlussteil (18) kontaktierend aufgesetzt werden kann.

2. Stator nach Anspruch 1,
**dadurch gekennzeichnet, dass** das Schutzleiter-Anschlussteil (18) in Längsrichtung gekröpft ist, wodurch sich zwei durch die Kröpfung voneinander getrennte Längsabschnitte, ein erster Längsabschnitt (28) und ein zweiter Längsabschnitt (30), ergeben.

3. Stator nach Anspruch 1 oder 2,
**dadurch gekennzeichnet, dass** durch Biegeformung eines/des ersten Längsabschnitts (28) des Schutzleiter-Anschlussteils (18) ein U-förmiger Einsteckkontakt (32) ausgeformt ist, wobei zwischen den U-Schenkeln des Einsteckkontakts (32) in der der Wellenöffnung (10) entgegengesetzten Richtung eine Einstecköffnung (35) gebildet ist.

4. Stator nach Anspruch 3,
**dadurch gekennzeichnet,dass** aus einem äußeren U-Schenket (33) des Einsteckkontaktes (32) ein sich im wesentlichen in Längsrichtung des ersten Längsabschnitts (28) erstreckender und zwischen die U-Schenkel gebogener erster Federarm (34) herausgeführt ist, der mit seiner der Einstecköffnung (35) zugewandten Seite mit dem Schutzleiter-Anschlussteil (18) verbunden ist.

5. Stator nach Anspruch 4,
**dadurch gekennzeichnet, dass** der erste Längsabschnitt (28) einen zweiten Federarm (36) aufweist, der sich im Wesentlichen in Längsrichtung des ersten Längsabschnitts (28) erstreckt, mit seiner der Einstecköffnung (35) zugewandten Seite mit dem Schutzleiter-Anschlussteil (18) verbunden ist und auf der dem Einsteckkontakt (32) gegenüberliegenden Seite des Schutzleiter-Anschlussteils (18) aus diesem derart herausgeführt ist, dass der zweite Federarm (36) im eingesetzten Zustand des Schutzleiter-Anschlussteils (18) das Lager (15) der Rotorwelle (11), insbesondere eine Klemmbrille (38) eines Kalottenlagers (17), elektrisch kontaktiert.

6. Stator nach einem der Ansprüche 2 bis 5,
**dadurch gekennzeichnet, dass** aus dem zweiten Längsabschnitt (30) ein, insbesondere dritter, Federarm (40) derart ausgeformt ist, dass er im eingesetzten Zustand des Schutzleiter-Anschlussteils (18) das Stator blechpaket (2) elektrisch kontaktiert, wobei sich der dritte Federarm (40) im Wesentlichen in Längsrichtung des zweiten Längsabschnitts (30) auf der den Einsteckkontakt (32) aufweisenden Seite des Schutzleiter-Anschlussteils (18) erstreckt und mit seiner der Einstecköffnung (35) abgewandten Seite mit dem Schutzleiter-Anschlussteil (18) verbunden ist.

7. Stator nach den Ansprüchen 5 und 6,
**dadurch gekennzeichnet, dass** der dritte Federarm (40) an seinem Ende (41) einen Abschnitt aufweist, der sich parallel zur Längsachse des zweiten Längsabschnitts (30) erstreckt.

8. Stator nach einem der Ansprüche 1 bis 7,
**dadurch gekennzeichnet, dass** das Schutzleiter-Anschlussteil (18) aus einem einstückigen gebogenen Blechzuschnitt, insbesondere aus Stahlblech besteht.

9. Stator nach einem der Ansprüche 1 bis 8,
**dadurch gekennzeichnet, dass** der Stator (1) eine Verschaltungsplatte (16) aufweist, in der das mit dem Schutzleiter verbundenes Steckverbindungsmittel, insbesondere ein Flachstecker (31), derart gehalten ist, dass das Steckverbindungsmittel im montierten Zustand der Verschaltungsplatte (16) in den Einsteckkontakt (32) des Schutzleiter-Anschlussteils (18) hineinragt und dieses elektrisch kontaktiert.

10. Stator nach einem der Anspruche 1 bis 9,
**dadurch** gekenneichnet, dass die Ausnehmung (42) zwei in axialer Richtung der Ausnehmung (42) verlaufende Nutenpaare (44) aufweiset.

11. Stator nach einem der Ansprüche 1 bis 10,
**dadurch gekennzeichnet, dass** das Schutzleiter-Anschlussteil (18) mittelbar über die Rotorwelle (11) mit dem Rotor des Motors verbunden ist.

## Claims

1. Stator (1) for an external rotor motor having a laminated stator core (2), a shaft opening (10) for a rotor shaft (11), stator windings (6), a hollow-cylindrical end insulation shaft (12) which, on at least one end face, extends axially in the direction of a stator end winding (8) which is formed by the stator windings (6), and having a protective earth conductor connecting part (18) which can be electrically connected to the laminated stator core (2.) and to a protective earth conductor, and which is held in a force-fitting and/or interlocking manner in the stator (1),
**characterized in that** a bearing seat (13) for a bearing (15) for bearing the rotor shaft (11) is formed in the hollow-cylindrical end insulation shaft (12), with a recess (42) which extends from the opening facing away from the laminated stator core (2) in the end insulation shaft (12) into the shaft opening (10) being formed between the bearing (15) and an outer circumferential surface of the end insulation shaft (12), into which recess (42) the protective earth conductor connecting part (18) can be inserted by being plugged in axially during assembly, that makes electrical contact with the laminated stator core (2) and the bearing (15) in the inserted state, and with the protective earth conductor connecting part (18) having a plug-in contact (32) for making electrical contact with the protective earth conductor, such that a plug connecting means (31), which is connected to the protective earth conductor, can be retrospectively fitted to the protective earth conductor connecting part (18), which is inserted into the recess (42) during assembly, such that it makes contact.

2. Stator according to Claim 1,
**characterized in that** the protective earth conductor connecting part (18) is bent in the longitudinal direction, thus forming two longitudinal sections which are separated from one another by the band, a first longitudinal section (28) and a second longitudinal section (30).

3. Stator according to Claim 1 or 2,
**characterized in that** the bending of a/the first longitudinal section (28) of the protective earth conductor connecting part (18) results in the formation of a U-shaped plug-in contact (32), with an insertion opening (35) being formed in the opposite direction to the shaft opening (10) between the U-limbs of the plug-in contact (32).

4. Stator according to Claim 3,
**characterized in that** a first spring arm (34), which extends essentially in the longitudinal direction of the first longitudinal section (28) and is bent between the U-limbs is passed out from an outer U-limb (33) of the plug-in contact (32), and its side facing the insertion opening (35) is connected to the protective earth conductor connecting part (18).

5. Stator according to Claim 4,
**characterized in that** the first longitudinal section (28) has a second spring arm (36), which extends essentially in the longitudinal direction of the first longitudinal section (28) and whose side facing the insertion opening (35) is connected to the protective earth conductor connecting part (18), and, on the side of the protective earth conductor connecting part (18) opposite the plug-in contact (32), is passed out of the latter such that the second spring arm (36) makes electrical contact with the bearing (15) for the rotor shaft (11), in particular with a clamping frame (38) for a cup bearing (17), when the protective earth conductor connecting part (18) is in the inserted state.

6. Stator according to one of Claims 2 to 5,
**characterized in that** a spring arm (40), in particular a third spring arm, is formed from the second longitudinal section (30) in such a way that, when the protective earth conductor connecting part (18) is in the inserted state, it makes electrical contact with the laminated stator core (2) with the third spring arm (40) extending essentially in the longitudinal direction of the second longitudinal section (30) on that side of the protective earth conductor connecting part (18) which has the plug-in contact (32), and with its side facing away from the insertion opening (35) being connected to the protective earth conductor connecting part (18).

7. Stator according to Claims 5 and 6,
**characterized in that**, at its end (41), the third spring arm (40) has a section which extends parallel to the longitudinal axis of the second longitudinal section (30).

8. Stator according to one of Claims 1 to 7,
**characterized in that** the protective earth conductor connecting part (18) is formed from an integral bent sheet-metal blank, in particular from sheet steel.

9. Stator according to one of Claims 1 to 8,
**characterized in that** the stator (1) has a circuit board (16) in which the plug connecting means, in particular a flat plug (31), which is connected to the protective earth conductor is held such that the plug connecting means project into the plug-in contact (32) of the protective earth conductor connecting part (18) when the circuit board (16) is in the installed state, and makes electrical contact with it.

10. Stator according to one of Claims 1 to 9,
**characterized in that** the recess (42) has two slot pairs (44) which run in the axial direction of the recess (42).

11. Stator according to one of Claims 1 to 10,
**characterized in that** the protective earth conductor connecting part. (18) is indirectly connected to the rotor of the motor via the rotor shaft (11).

## Revendications

1. Stator (1) pour un moteur à rotor extérieur comprenant un paquet de tôles de stator (2), une ouverture d'arbre (10) pour un arbre de rotor (11), des enroulements de stator (6), une tige isolante frontale (12) qui s'étend au moins sur un côté frontal, axialement en direction d'une tête d'enroulements de stator (8) formée par les enroulements de stator (6), ainsi qu'une partie de raccordement de conducteur de protection (18) qui peut être reliée électriquement au paquet de tôles de stator (2) et à un conducteur de protection, partie qui est tenue dans le stator (1) par une liaison par action de force et/ou par complémentarité de forme,
**caractérisé en ce que**, dans la tige isolante frontale cylindrique creuse (12) est formée un logement de palier (13) pour un palier (15) destiné au montage rotatif de l'arbre de rotor (11), cependant que, entre le palier (15) et une surface périphérique extérieure de la tige isolante frontale (12), est formée un évidement (42) qui s'étend de l'ouverture de la tige isolante frontale (12) éloignée du paquet de tôles de stator (2) jusque dans l'évidement (42) qui s'étend dans l'ouverture d'arbre (10), évidement dans lequel la partie de raccordement de conducteur de protection (18) peut être inséré par emmanchement axial lors du montage, et qui, dans l'état inséré, entre en contact électrique avec le paquet de tôles de stator (2) et avec le palier (15), la partie de raccordement de conducteur de protection (18) présentant un contact à emmanchement (32) pour établir le contact électrique avec le conducteur de protection de telle manière que, lors du montage, un moyen d'assemblage à emmanchement (31) relié au conducteur de protection (18) puisse être appliqué en contact ultérieurement sur la partie de raccordement de conducteur de protection (18) emboîté dans l'évidemment (42)

2. Stator selon la revendication 1,
**caractérisé en ce que** la partie de raccordement de conducteur de protection (18) est coudée dans la direction longitudinale, de sorte qu'on obtient deux tronçons longitudinaux, un premier tronçon longitudinal (28) et un deuxième tronçon longitudinal (30), séparés l'un de l'autre par le coude.

3. Stator selon la revendication 1 ou 2,
**caractérisé en ce que**, par formage par pliage d'un tronçon longitudinal (28) ou du premier tronçon longitudinal (28) de la partie de raccordement de conducteur de protection (18), on a formé un contact à emmanchement (32) en forme de U cependant qu'une ouverture d'emmanchement (35) est formée entre les branches du U du contact à emmanchement (32), dans la direction qui est opposée de l'ouverture d'arbre (10).

4. Stator selon la revendication 3,
**caractérisé en ce que** à partir d'une branche de U extérieure (33) du contact à emmanchement (32) est formé un premier bras élastique (34) qui s'étend sensiblement dans la direction longitudinale du premier tronçon longitudinal (28) et est recourbé entre les branches de U, et qui est relié à la partie du raccordement de conducteur de protection (18) par son côté dirigé vers l'ouverture d'emmanchement (35).

5. Stator selon la revendication 4,
**caractérisé en ce que** le premier tronçon longitudinal (28) présente un deuxième bras élastique (36) qui s'étend sensiblement dans la direction longitudinale du premier tronçon longitudinal (28), est relié à la partie de raccordement de conducteur de protection (18) par son côté dirigé vers l'ouverture d'emmanchement (35) et, sur le côté qui est à l'opposé du contact à emmanchement (32), est sorti de cette partie de telle manière que, dans l'état emmanché de la partie de raccordement de conducteur de protection (18) le deuxième bras élastique (36) soit en contact électrique avec le palier (15) de l'arbre de rotor (11), en particulier avec une lunette de serrage (38) d'un palier à calotte (17).

6. Stator selon une des revendications 2 à 5,
**caractérisé en ce que**, en partant du deuxième tronçon longitudinal (30), un bras élastique (40) et en particulier un troisième bras, est formé de manière que, dans l'état emmanché de la partie de raccordement de conducteur de protection (18), il entre en contact électrique avec le paquet de tôles de stator (2), le troisième bras élastique (40) s'étendant sensiblement dans la direction longitudinale du deuxième tronçon longitudinal (30) sur le côté de la partie de raccordement de conducteur de protection (18) qui présente le contact à emmanchement (32) tandis que, par son côté qui est éloigné de l'ouverture d'emmanchement (35) , il est relié à la partie de raccordement de conducteur de protection (18).

7. Stator selon les revendications 5 et 6,
**caractérisé en ce que** le troisième bras élastique (40) présente à son extrémité (41) un segment qui s'étend parallèlement à l'axe longitudinal du deuxième tronçon longitudinal (30).

8. Stator selon une des revendications 1 à 7,
**caractérisé en ce que** la partie de raccordement de conducteur de protection (18) est composée d'un flan de tôle pliée en une seule pièce, en particulier de tôle d'acier.

9. Stator selon une des revendications 1 à 8,
**caractérisé en ce que** le stator (1) présente une plaque de câblage (16) dans laquelle le moyen d'assemblage à emmanchement relié au conducteur de protection, en particulier une broche plate (31) est tenue de manière que, à l'état monté de la plaque de câblage (16), le moyen d'assemblage à emmanchement soit engagé dans le contact à emmanchement (32) de la partie de raccordement de conducteur de protection (18) et entre en contact électrique avec cette partie.

10. Stator selon une des revendications 1 à 9,
**caractérisé en ce que** l'évidement (42) présente deux paires de rainures (44) qui s'étendent dans la direction axiale de l'évidement (42).

11. Stator selon une des revendications 1 à 10,
**caractérisé en ce que** la partie de raccordement de conducteur de protection (18) est reliée indirectement au rotor du moteur par l'intermédiaire de l'arbre de rotor (11)
